# EUROPEAN PATENT SPECIFICATION

(11) **EP 4 435 044 B1**
(45) Date of publication and mention of the grant of the patent: **05.11.2025**
(21) Application number: 22822651.0
(22) Date of filing: 17.11.2022
(51) Int. Cl.: C08K 3/26, C08K 5/053, C08L 3/02, C08L 5/02

(54) **BIODEGRADABLE, TRANSPARENT AND FLEXIBLE POLYMERIC MATERIAL, PRODUCTION METHOD AND USES THEREOF**
TRANSPARENTES UND FLEXIBLES BIOLOGISCH ABBAUBARES POLYMERMATERIAL, HERSTELLUNGSVERFAHREN UND SEINE VERWENDUNGEN
MATÉRIAU POLYMÈRE BIODÉGRADABLE TRANSPARENT ET FLEXIBLE, PROCÉDÉ DE FABRICATION ET SES UTILISATIONS

(30) Priority: 19.11.2021 PT 2021117586; 14.12.2021 EP 21214526
(43) Date of publication of application: 25.09.2024
(73) Proprietor: Bioworld - Social Impact, Lda, 4200-135 Porto (PT)
(72) Inventor: DOS SANTOS COSTA PEREIRA, Honorata, 3360-182 PENACOVA (PT)
(74) Representative: Patentree
(86) International application number: PCT/IB2022/061081
(87) International publication number: WO 2023/089518

(56) References cited:
- WO-A1-2017/007116
- EA-A1- 201 991 718
- EA-B1- 039 636
- US-B1- 6 231 970
- BOOTKLAD MUNLIKA ET AL: "Biodegradation of thermoplastic starch/eggshell powder composites", CARBOHYDRATE POLYMERS, APPLIED SCIENCE PUBLISHERS , LTD BARKING, GB, vol. 97, no. 2, 23 May 2013 (2013-05-23), pages 315 - 320, XP028687319, ISSN: 0144-8617, DOI: 10.1016/J.CARBPOL.2013.05.030
- SYAFRI EDI ET AL: "Effect of Precipitated Calcium Carbonate on Physical, Mechanical and Thermal Properties of Cassava Starch Bioplastic Composites", INTERNATIONAL JOURNAL ON ADVANCED SCIENCE, ENGINEERING AND INFORMATION TECHNOLOGY, vol. 7, no. 5, 31 October 2017 (2017-10-31), pages 1950, XP055925823, ISSN: 2088-5334, DOI: 10.18517/ijaseit.7.5.1292

## Description

### TECHNICAL FIELD

The present description concerns a transparent and flexible biodegradable polymeric material, more particularly a biopolymer from waste and by-products of the food industry, method of production and its uses.

### BACKGROUND

In its pure state, calcium carbonate is a solid compound, in the form of a fine crystalline powder, white in color, odorless, with alkaline properties, decomposed at a temperature of 470°C, density of 2.65 gcm⁻³, stable, non-flammable, non-corrosive, non-bio accumulative and non-toxic.

Because it is not soluble in water, it is found in the sea as a component of shell and coral skeletons. Calcium carbonate is one of the raw materials used in the manufacture of cement, steel, and glass. In winemaking, it is used to lower the acidity of wine, and in agriculture, to correct soil acidity (liming). It is added to toothpastes, acting as an abrasive, and is also used in medicines to treat diseases caused by calcium deficiency, such as osteoporosis. It is also one of the main inputs used in the Solvay Process, an industrial process created by Belgian industrial chemist Ernest Solvay in the mid-19th century to obtain sodium carbonate (Na₂CO₃) [5].

Calcium carbonate is present in large quantities in nature, being the main component of limestone and marble, it can also be found in aragonite, calcite, and eggshell [5].

The chemical composition of eggshell is as follows: Calcium Carbonate (95%), Magnesium Carbonate (1%), Calcium Phosphate (1%) and organic matter essentially glycoproteins (4%) [12]. According to INE (2014), in 2013 in mainland Portugal 125 452 tonnes of hen eggs were produced, with the shell representing about 11% of the egg weight, which resulted in 13 799.7 tonnes of eggshell as waste, often responsible for the proliferation of salmonella. This waste, resulting from industrial processes has been used in agriculture to correct the pH of acidic soils. However, according to OLIVEIRA et al. (2013), currently this is an undervalued waste and therefore new measures should be applied to add economic value, such as using it as raw material for other activities. However, eggshell has not yet gained much attention regarding its conversion into new materials.

The waste generated from egg production and consumption is non-toxic, but its accumulation attracts pests and vermin due to the large nutritional content [1].

Document BR112014029845B1 describes xanthan-based compositions for obtaining biocompatible and biodegradable bioplastics and obtained biocompatible and biodegradable bioplastics. It belongs to the field of compositions of bioplastics, biocompatible and biodegradable, environmentally friendly, of fast degradation when compared to conventional ones, edible or not, water-soluble, or not, flexible, semi-flexible and rigid, by the combination of materials.

Document US20180002513A1 relates to a bioplastic composition comprising wheat bran which is a food by-product and a bioplastic pellet / film using the same. More particularly, the present invention relates to a bioplastic composition comprising wheat bran and a bioplastic film using the same wherein the properties of the composition are enhanced to ensure improved properties of the bioplastic film prepared therefrom, thereby showing a carbon reduction effect and providing a substitute for conventional petroleum-derived bioplastic products.

Document EP3305855A2 describes a bioplastic composition comprising wheat bran which is a food by-product and a bioplastic pellet / film using the same. More particularly, the present invention relates to a bioplastic composition comprising wheat bran and a bioplastic film using the same wherein the properties of the composition are increased to ensure improved properties of the bioplastic film prepared therefrom, thereby showing a carbon reduction effect and providing a substitute for conventional petroleum-derived bioplastic products.

Bootklad Munlika et al., 2013: "Biodegradation of thermoplasticstarch/eggshell powder composites", Carbohydrate Polymers, 97:315 relates to thermoplastic starch with chicken eggshell as a filler.

Syafri Edi et al. 2017: "Effect of Precipitated Calcium Carbonate on Physical, Mechanical and Thermal Properties of Cassava Starch Bioplastic Composites", International Journal on Advanced Science, 7:1950 discloses bioplastic composites from various natural polymers reinforced with precipitated calcium.

In turn, polymers are macromolecules formed by repeating units (monomers) that interact with each other, based on their predominance by covalent bonds, which give the material attributes such as electrical insulation [9]. Plastics, in turn, are materials that have as raw material a synthetic polymerized organic substance, which presents high malleability, easily transformable using heat and pressure, and can be used in the manufacture of various objects [4].

Over time, it became necessary to search for alternatives and studies to produce a plastic that would minimize the impact on the environment. Several researchers have developed the bioplastic, which is made of organic, non-synthetic matter [2]. One of the most efficient polymers in the production of bioplastics, is the starch found in tubers, cereals, and roots. This can be easily transformed into a thermoplastic material, offering an important alternative to replace synthetic polymers in applications where biodegradability is desirable. Starch is a natural polysaccharide formed by two components, amylose, and amylopectin, both made up of repetitive units of D-glycopyrane monomers. Amylose consists of a linear chain, and amylopectin of branched chains (α 1→4 and 1→6 D-glucose bonds, respectively). Starch is presented in the form of granules, their shape and size being characteristic of the plant of origin [2]. The process of plasticization or destructuring of starch consists in the destruction of the organized structure of the starch granule. This destructuring is done through the casting method, which consists of solubilizing the starch in a solvent and applying it on a support for solvent evaporation and consequent formation of a continuous matrix that gives rise to the films. Starch grains are usually processed by heating to 75°C in aqueous medium, which results in their gelatinization. This process causes loss of molecular order and melting of the starch crystals, due to the breakdown of hydrogen bonds responsible for the crystallinity of the polymer [2]. As the decomposition temperature is lower than the melting and glass transition temperatures (phase transition temperature that occurs in amorphous materials), it becomes necessary to add a plasticizing agent so that its melting and glass transition point decreases [2]. Plasticizers are substances that are added to polymers with the primary objective of increasing their (plasticization) and secondary effect of improving their processability. The plasticizing agent must be polar, hydrophilic, compatible with the base of the polymeric film formation, with a boiling point high enough to avoid its evaporation during the process [7]. Finally, calcium carbonate (or calcite, in natural form) is a mineral that can be occasionally added as an inert filler in thermoplastics. This mineral serves to reinforce some polymer properties, processing properties, among other qualities.

These facts are described to illustrate the technical problem solved by the embodiments of the present document.

### GENERAL DESCRIPTION

The present description relates to a polymer, more specifically to resistant, flexible, and transparent bioplastic/biopolymer, wherein the polymer is obtainable from poultry eggshell, a source rich in calcium carbonate, and starch, preferably potato starch. Poultry eggshell, a food waste, but which is produced on a large scale and can be a source of proliferation of salmonella.

In an embodiment, the eggshells were collected in the region of Tábua. Subsequently, their washing, sanitization and dehydration and sieving was carried out. The polymer, preferably the bioplastic/biopolymer, of the present disclosure was obtained by polymerization of starch, extracted from the effluents of the potato processing industry, in acid medium with the addition of eggshells. Surprisingly, it was observed that the mixture of calcium salts from eggshells and the starch from the food industry allow obtaining a resistant, flexible, transparent, and biodegradable polymeric film. Due to the raw material and the biodegradability of the final film the product obtained falls within the bioplastic/biopolymer materials.

The present disclosure relates to a transparent and flexible biodegradable polymeric material comprising calcium salts and potato starch, wherein mechanical strength of the material ranges from 0.014-0.034 N/mm².

In an embodiment the strength of the material can be calculated in several ways, in the present embodiment the strength of the polymeric film was determined by Young's Modulus, according to the test ASTM D638-14 (2014) [10].

In an embodiment the water absorption rate of the material can be calculated in several ways, in the present embodiment the ASTM D570-98 (2018) test was used as the standard method to determine the water absorption of each polymeric material sample [8], over 40 days.

In an embodiment the biodegradability of the polymeric film was determined according to ASTM D6003-96 (1996) standard used as a standard method to determine the mass loss of bioplastics [8], with a duration of 32 days.

In an embodiment, the transparent and flexible biodegradable polymeric material, whose chemical characterization by Fourier Transformed Infrared (FTIR) Universal Attenuated Total Reflectance (UATR) and Transmittance (T) comprises the following functional groups CH₂, OH, C=O. The PO and PC type samples also present CaCO₃, in their chemical constitution and the PO type samples also present the functional group N=H. Thus, the transparent and flexible biodegradable polymeric material of the present disclosure comprises calcium carbonate, protein fibers and functional groups, wherein the functional groups comprise CH₂, OH, C=O and amide groups.

In an embodiment, the source of calcium salt is from eggshells, in particular poultry eggshells; wherein the source of starch is an agri-food effluent, in particular potato starch.

In an embodiment, the biodegradable polymeric material of the present disclosure may comprise 8 to 10% (w/v) of starch, 2% (w/v) of calcium, optionally a plasticizing agent, and the remainder is an aqueous solvent.

In an embodiment, the biodegradable polymeric material of the present disclosure may comprise 7 to 15% (w/v) starch, 2 - 25 % (w/v) calcium salt, optionally a plasticizing agent, and the remainder is an aqueous solvent.

In an embodiment, the biodegradable polymeric material of the present disclosure may comprise 8 - 10% (w/v) starch, 5 - 20 % (w/v) calcium salt, optionally a plasticizing agent, and the remainder is an aqueous solvent.

In an embodiment, the aqueous solvent comprises organic acid; preferably a weak organic acid, more preferably 1.5 - 3 %(v/v) organic acid; even more preferably acetic acid, lactic acid, citric acid. The addition of organic acid allows the pH to be maintained between 4 and 5 for optimization of the polymerization.

In an embodiment, plasticizer can be glycerol, preferably 1-5% (w/v) glycerol, more preferably 2-3% (w/v) glycerol.

In an embodiment, the mass ratio of calcium and starch varies from [1.5 - 6] % (w/w). The embodiments with higher percentage have greater mechanical resistance and biodegradation in soil is faster.

In an embodiment, the eggshell particle size ranges from 3 µm to 300 µm; more preferably from 4.5 µm to 200 µm; more preferably from 10 µm to 100 µm. The measurement of the eggshell particle size can be carried out in various ways, in this disclosure the eggshell particle size was carried out based on the standard of the particle size analysis by mechanical sieving.

In an embodiment, the biodegradable polymeric material further comprises a dye, preferably wherein the dye is an anthocyanin; more preferably it is a bio dye.

In an embodiment, the source of anthocyanins is from red cabbage or beetroot waste.

In an embodiment, the biodegradable polymeric material of the present disclosure may further comprise an additional polymer such as cellulose, or cellulose derivatives, alginate, chitosan, collagen, cellulose, or mixtures thereof.

In an embodiment, the biodegradable polymeric material of the present disclosure may further comprise silver particles, which have an antimicrobial effect.

In an embodiment, the biodegradable polymeric material of the present disclosure may further comprise a chitin protein.

In an embodiment, the degradability time of the transparent and flexible biodegradable polymeric material described in the present disclosure in soil is at least 30 days, more preferably at least 32 days and even more preferably at least 35 days.

In an embodiment, the biodegradable polymeric material of the present disclosure is presented in the form of a polymeric film.

The present disclosure further relates to the use of the transparent and flexible biodegradable polymeric material described in the present disclosure as a fertilizer.

The present disclosure further relates to an article comprising the polymeric material described in any of the preceding embodiments.

In an embodiment, the article is a film, a net, a coating, a package, or a pellet.

Further described is a method of producing the transparent and flexible biodegradable polymeric material described in any of the foregoing embodiments comprising the following steps:
hydrolyzing starch from a food industry effluent with a weak acid,
adding calcium carbonate;
adding glycerol, mixing the various components at a pH below 5 until a polymerizable mixture is obtained with a viscosity ranging from 67-92 mPa.s at 25°C to obtain a film.

In an embodiment the viscosity of the material can be calculated in several ways, in the present embodiment the viscosity of the paste was determined at 25°C using the SV10 vibrational viscometer.

In an embodiment, wherein the weak acid may have from 5% to 9% acidity.

In an embodiment, the weak acid may be selected from a list consisting of acetic acid, lactic acid, citric acid, ascorbic acid, or mixtures thereof.
the film is that occurs the mixture is poured directly as a layer by molding or by extrusion.

In an embodiment, 8 to 10% (w/v) of the extracted starch can be hydrolyzed in a 2% (w/v) solution of the weak acid with 80 ml to 100 ml of water.

In an embodiment, the step of heating the mixture occurs between 50 - 90 °C, preferably 50 - 65°C.

In an embodiment, the method of the present disclosure comprises adding 1-5% (w/v) glycerol, preferably 2-3% (w/v) glycerol.

In an embodiment, the amount of plasticizing agent is less than the amount of acid so that the breaking of hydrogen bonds present in the bead molecule is effective and forms a uniform polymer during the final retrogradation step.

A further aspect of the present disclosure relates to the use of the transparent and flexible biodegradable polymeric material described in the present disclosure as a soil regenerator.

### SHORT DESCRIPTION OF THE FIGURES

For easier understanding, attached are the figures, which represent preferred embodiments that are not intended to limit the object of the present description.
Figure 1: Graphical representations of the "P0"(344b), "PO1" (348), "PO2"(349), "PO3" (350b), "PC1"(345), "PC2" (346), "PC3"(347), "ground"(352) and "Ground after"(353) spectra in overview mode. Represents the spectra.

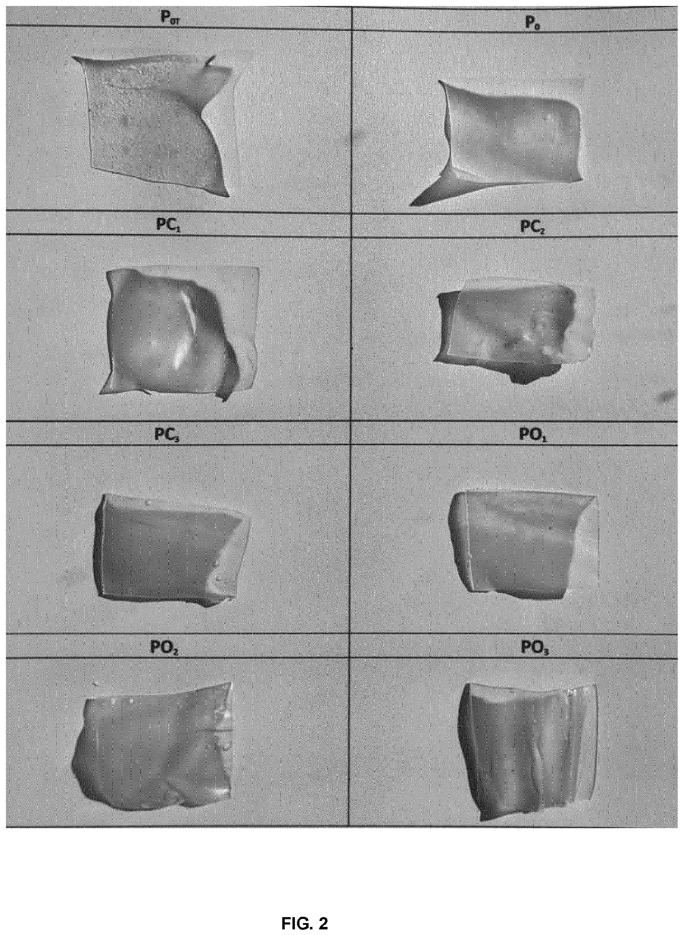

Figure 2: Schematic representations of polymeric material samples of the present disclosure.

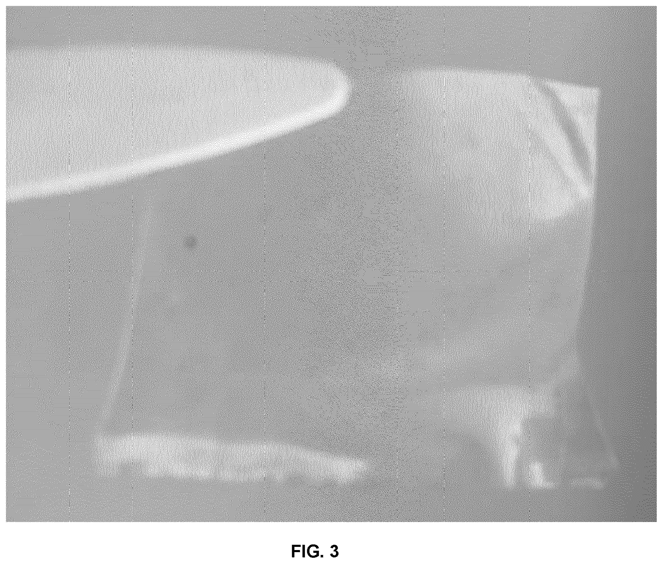

Figure 3: Schematic representations of a transparent sample of the P0T sample.
Figure 4: Graphic representations of the water absorption test of each sample.
Figure 5: Graphic representations of the water absorption rate of each sample.
Figure 6: Graphic representations of the mechanical resistance test - Young's modulus.
Figure 7: Graphic representations of the biodegradability test of each sample - mass variation over time.
Figure 8: Graphic representations of the rate of loss of mass of each sample, over time.

### DETAILED DESCRIPTION

The present description concerns a transparent and flexible biodegradable polymeric material, more in particular a biopolymer from waste and by-products of the food industry, method of production and its uses. The present solution can be used in the food industry, in agriculture and animal husbandry chemistry or in soil regeneration. More in particular to a biopolymer from waste and by-products of the food industry, production method and its uses.

In an embodiment, calcium carbonate is an inorganic compound of chemical formula CaCO₃, it is a salt that is practically insoluble in water, however, soluble in water carbonated with carbon dioxide, CO₂, according to the reaction:

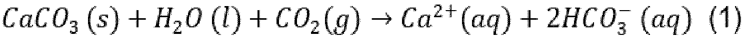

Reaction (1) is responsible for the formation of limestone caves, in which upper calcium carbonate structures, known as stalactites, and lower ones, which are named stalagmites, are found.

The following table represents the amount of calcium carbonate from eggshells.

**Table 1- Amount of calcium carbonate from eggshells**

| n CaCO₃/mol | nHCl excess/mol | nHCl reacted CaCO₃/mol | nCaCO₃/ mol | %CaCO₃ | Average variance |
|---|---|---|---|---|---|
| 0.00042 | 0.00182 | 0.00068 | 0.00034 | 80.8 | 9.5 |
| 0.00040 | 0.00170 | 0.00080 | 0.00040 | 99.8 | 7.9 |
| 0.00041 | 0.00181 | 0.00069 | 0.00035 | 83.2 | 8.3 |
| | | | Average percentage | 87.9 | Error 9.5 |

In its pure state, calcium carbonate is a solid compound, in the form of a fine crystalline powder, white in color, odorless, with alkaline properties, decomposed at a temperature of 470°C, of a density of 2.65 g/cm³, stable, non-flammable, non-corrosive, non-bio accumulative and non-toxic.

On the other hand, the preservation and recovery of the environment are no longer exclusive issues for ecologists, becoming part of every citizen's conscience and adding value to companies. The union of the innovation area with the study of waste reuse integrates the advance that today's society requires and the necessary protection of the environment. The chicken eggshell consists essentially of a structure composed of 4 layers: the cuticle on the outer surface, a spongy layer (calcareous) and a lamellar layer inside and an inner membrane.

In an embodiment, nevertheless, this type of waste (eggshell) has all the conditions to be used as a secondary raw material able to replace applications where calcite of geological origin is used as a by-product, for example, in the areas of bioplastics, paper and rubber, and bio ceramics, namely hydroxyapatite, while decreasing this type of waste resulting from food industries. Therefore, the present disclosure has as one of its objectives to measure the amount of calcium carbonate in eggshells, obtain calcium oxide from calcium carbonate, and verify the use of calcium carbonate as a stabilizer for starch bioplastics. In this way, we intend to use eggshells essentially composed of calcium carbonate, in applications where this compound is normally used as an additive in industrial processes, i.e., as a secondary raw material, and on the other hand, to evaluate its use in the synthesis of new materials, such as bio ceramics and biopolymers (bioplastics).

The following embodiment relates to materials and methods for producing the polymeric material described in the present embodiment, including the preparation of eggshell.

In an embodiment, the poultry eggshells were collected in the pastry shops of Oliveira do Hospital, in the morning period, were immediately transported to the laboratory of chemistry and environment, where they were washed with running water, and then manually removed the internal film. In an embodiment, the cleaned shells were sterilized in an autoclave (UNICLAVE 88), for 30 min, at 120 °C. After the sterilization process, the shells were placed in an oven at 50°C for 24 hours to eliminate water. After cleaning and drying, the shells were ground in a vibratory disc mill (LM1.5). After this process, the shells were sieved, in a vibratory shaker (Gravimeta Retsch). Samples with a particle size between 4.5 µm and 200 µm were collected. The samples were packed in analises packs.

In an embodiment, before the sieving process, a sample was taken for X-Ray analysis.

Next, we describe the determination of Calcium Carbonate by volumetric neutralization analysis (back titration). In an embodiment, approximately 0.0400 g of each sample was measured, calcium carbonate was dissolved in 25 mL of HCl, then 5 drops of the indicator phenolphthalein were added. The excess HCl that did not react with the sample was titrated with NaOH solution and, by difference, the Ca content in the eggshell was determined. The tests were performed in triplicate, and the average of the volumes was calculated to determine the percentage of calcium carbonate and calcium oxide.

Next, we describe the synthesis of bioplastic from potato starch with addition of eggshell. In an embodiment, the synthesis of the plastic film on bench, was performed in the materials laboratory at the Physics Department of the University of Aveiro. The starch samples were collected from the effluent of the snack food industry.

In an embodiment, the bioplastic named P₀, was obtained by solubilizing 8 to 10% (w/v) of the extracted starch, in 2% (v/v) of organic acid (e.g., acetic acid, lactic acid, citric acid) with (5% to 9% acidity) and 80 ml to 100 ml of water. The mixture was heated at 65°C, where 2% (v/v) glycerol was added. The mixture was heated to 90°C. After the increase in viscosity, heating with stirring was maintained, for about 20 minutes. After polymerization, the mixture was transferred to circular molds of 5 cm diameter, spread on film about 1 cm thick, for the biodegradability and water absorption tests. It was placed in 100 mm x 100 mm rectangular molds for the mechanical strength test. The bioplastics named PC₁, PC₂ and PC₃, were obtained by repeating the procedure, adding 5% (w/v), 10%(w/v) and 20%(w/v) calcium carbonate respectively, before the starch polymerization process. The bioplastics named PO₁, PO₂ and PO₃ were obtained by replacing, in the previous process the calcium carbonate by eggshell.

**Table 2 - Identification of samples and their components**

| Sample | Component 1 | Starch | Organic Acid | Water |
|---|---|---|---|---|
| PC₁ | 5% (w/v) CaCO₃ | 10% (w/v) | 2% (v/v) acetic acid | 80 ml |
| PC₂ | 10%(w/v) CaCO₃ | 10% (w/v) | 2% (v/v) acetic acid | 80 ml |
| PC₃ | 20%(w/v) CaCO₃ | 10% (w/v) | 2% (v/v) acetic acid | 80 ml |
| PO₁ | 5% (w/v) eggshell | 10% (w/v) | 2% (v/v) acetic acid | 80 ml |
| PO₂ | 10%(w/v) eggshell | 10% (w/v) | 2% (v/v) acetic acid | 80 ml |
| PO₃ | 20%(w/v) eggshell | 10% (w/v) | 2% (v/v) acetic acid | 80 ml |

In an embodiment, the quantitative determination of CaCO₃ present in the eggshell was performed by volumetric neutralization analysis, titrating the amount of HCl not consumed in the chemical reaction (back titration). The sample was solubilized in a solution of HCl 0.1 moldm⁻³ in excess, equation 2. The amount of HCl that did not react was titrated with a solution of NaOH 0.1 moldm⁻³ and, by difference, it was possible to determine the percentage of CaCO₃ present in the raw eggshell. The same procedure was carried out with the calcined eggshell, however, substituting the CaCO₃ for CaO, which facilitated the titration, since the solubilization of the calcined eggshell is total in acid medium, different from the natural eggshell, since there is no solubilization of the organic film. Chemical equation 3 represents the solubilization of the CaO present in the calcined shell, while equation 4 represents the titration of the excess hydrochloric acid:

*CaCO*₃(*s*) + 2*H⁺* (*aq*) *+* 2*Cl⁻* (*aq*) → *Ca*^{2*+*}(*aq*) + 2*Cl⁻* (*aq*) *+ CO*₂ (*g*) *+ H*₂*O* (*l*) (2)

*CaO* (*s*) + 2*HCl* (*aq*) → *CaCl*₂(*aq*) *+ H*₂*O* (*l*) (3)

*HCl* (*aq*) *+ NaOH* (*aq*) → *NaCl* (*aq*) *+ H*₂*O* (*l*) (4)

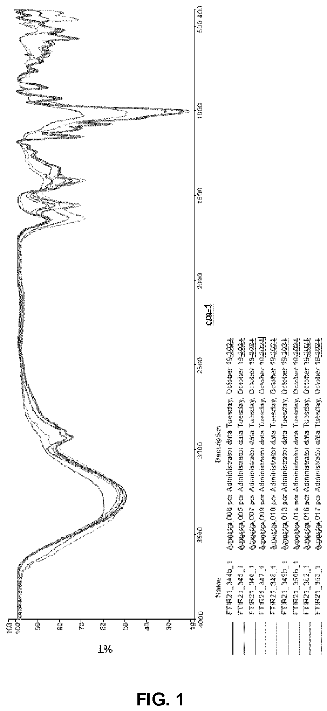

In an embodiment, **Figure 1** shows the percentage of CaCO₃ present in the raw eggshell samples and Table 2 shows the percentage of CaO in the calcined eggshell sample. The percentage of CaO present in the calcined eggshell demonstrated that the parameters used (time and temperature) were adequate for the elimination of organic matter present in the eggshell and also for the total conversion of CaCO₃ into CaO, since the CaO contents are close to 100 %. The results showed that CaCO₃ is the majority component of chicken eggshell, however the result, (87.9±9.5) % is lower than that presented in the bibliography, which refers to a percentage of about 95% of CaCO₃, present in eggshell, [1] and [12]. Considering the error, the value is within the expected value, however this difference is because it was very difficult to completely dissolve the CaCO₃ sample in hydrochloric acid.

Thus, according to the results this waste material can be used for purification and isolation of CaCO₃ and also obtaining CaO.

In an embodiment, in view of the preliminary results obtained and their characteristics, from the methodology used, it was possible to obtain plastic films from starch extracted from potato peel. Analyzing the tests performed, it was noticed that the plastics with more consistency, resistance and that dried faster, were those that used calcium salts, which indicates that the Ca²⁺ ion stabilizes the chemical bonds between monomers, conferring greater resistance to the bioplastic. On the other hand, it was found that the degradation of starch granules is very important for the film formation process. Thus, the amount of plasticizing agent should always be lower than the amount of acid so that the breaking of hydrogen bonds present in the granule molecule is effective and forms a uniform polymer during the final retrogradation step.

The following embodiment concerns the Mechanical Resistance test, Water Absorption test and Biodegradability test.

In an embodiment, the biodegradation of the bioplastic/biopolymer was evaluated fortnightly, after total drying of the samples, by placing 20 x 20 mm squares of each of the samples, and synthetic plastic, on garden soil. It was found that after 32 days the samples disappeared, thus proving that the polymeric film with this composition is biodegradable and can be used as fertilizer.

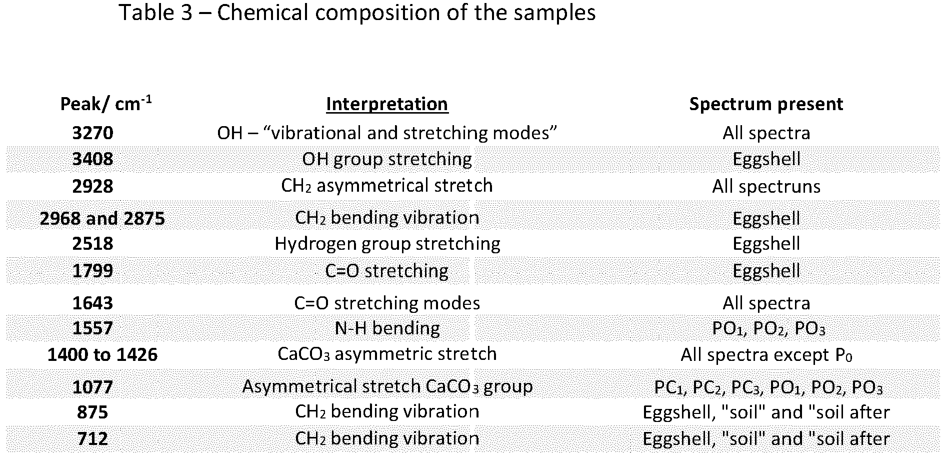

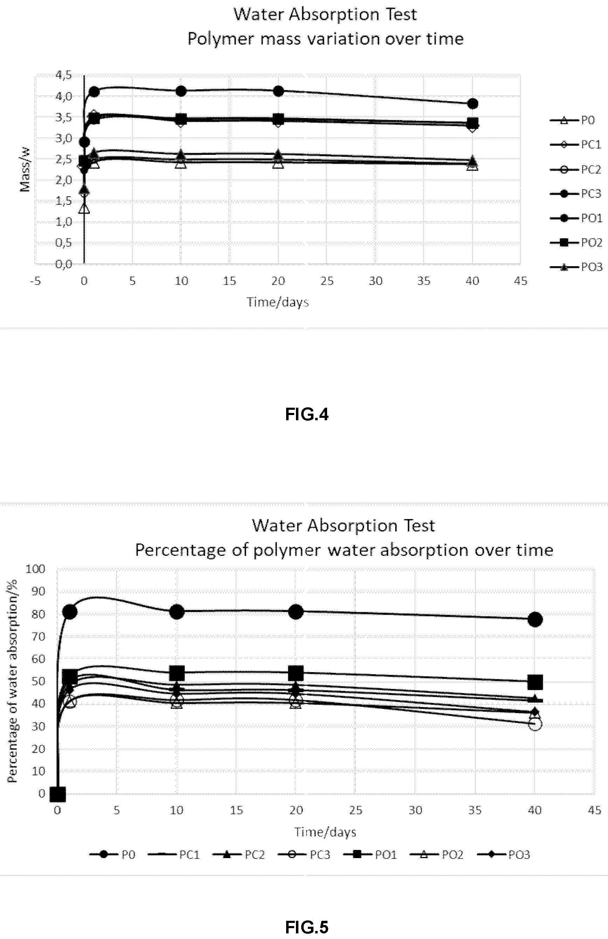

In an embodiment, Figures 4 and 5 show that the P₀ sample is the sample that absorbs the greatest amount of water, 81%, in the first 24 hours. The results also show that as the amount of calcium carbonate present in the samples increases, the rate of water absorption decreases. This indicates that calcium carbonate occupies the pores of the polymer, acting as a barrier to water absorption.

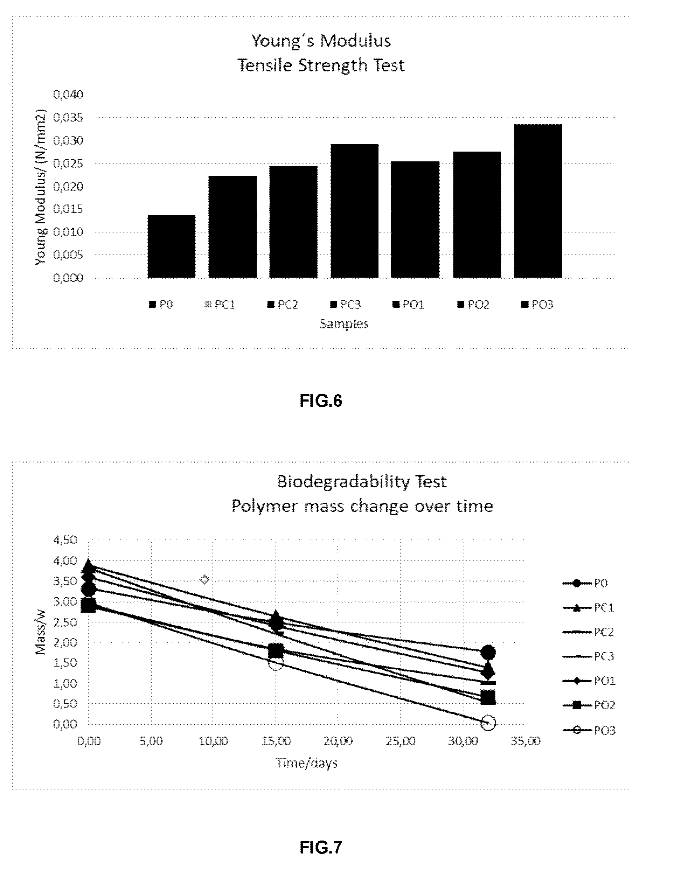

In an embodiment, the analysis of Figure 6, allows to note that the samples with eggshell, present higher values of Young's Modulus. The higher this value, the stronger and more rigid is the material.

In an embodiment, the higher value of Young's Modulus of the eggshell polymeric material, PO samples, compared to the material with calcium carbonate, PC samples, is because the eggshell consists of calcium carbonate and protein fibers, indicated by the presence of the N-H group, characteristic of the amino acids that constitute proteins, Table 2.

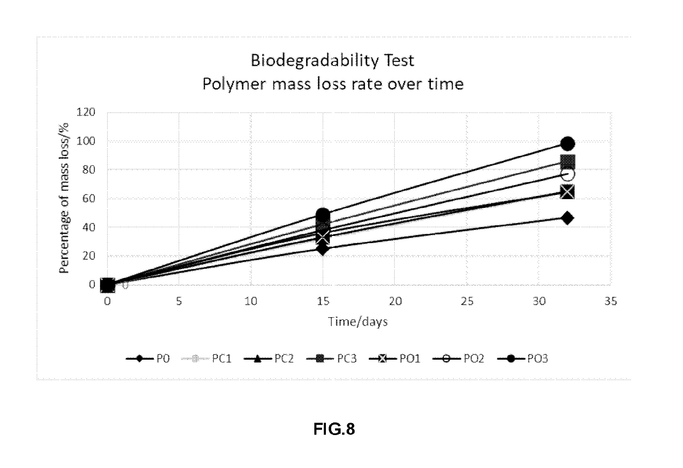

In an embodiment, Figures 7 and 8 show that the samples degrade in the soil over time, and the sample with the largest amount of eggshell, sample PO₃, disappears in the soil after 32 days. On the other hand, its degradation increases the amount of calcium carbonate, present in the "soil after", as shown in figure 4. Thus, the hypothesis is that calcium carbonate, combined with optimal conditions of humidity and temperature, promotes the growth of decomposing organisms, thus increasing the degradation of polymeric material.

Thus, it is concluded that the addition of eggshell, reduces the rate of water absorption, increases the mechanical strength, and accelerates the process of degradation of the polymeric material in the soil. The PC₁ and PO₁ type samples, can be options for application in agriculture, since, on the one hand, they absorb and retain moisture, minimizing irrigation and, on the other hand, they have calcium carbonate, for soil correction, when the polymer degrades, as indicated in graph 1, by the increase in peak intensity from 1400 nm to 1425 nm, in the "soil after" degradation samples.

The term "comprises" or "comprising" when used herein is intended to indicate the presence of the mentioned features, elements, integers, steps and components, but does not preclude the presence or addition of one or more other features, elements, integers, steps and components, or groups thereof.

The described embodiments are combinable with each other.

The present invention is, of course, in no way restricted to the embodiments described herein, and a person with average knowledge in the art could foresee many possibilities of modifying the same and of substituting technical characteristics for equivalent ones, depending on the requirements of each situation, as defined in the appended claims.

### References

[1] BEZERRA, H. M.; SILVA, T. A. da; LELLO, B. C. Di. Aproveitamento da casca de ovo para a sintese de compostos inorgânicos. Instituto Federal de Educação, Ciência e Tecnologia, Nilópolis, p.12-13, 2012.
[2] BRITO, G. F.; Agrawal, P.; Araújo, e. M.; Mélo, T. J. A; Departamento de Engenharia de Materiais - Universidade Federal de Campina Grande.
[3] Biopolimeros, Polímeros Biodegradáveis e Polímeros Verdes. Revista Eletrônica de Materiais e Processos, Campina Grande, v. 6, n. 2, p. 127-139, 2011.
[4] CASTILHO, Luiciano Geraldo de; Centro Paula Souza, Faculdade de Tecnologia Sorocaba. Fidelizar clientes ao tratar residuos - Ações ambientais no mercado de polimeros, 2011. 74 p, il. Monografia (Tecnólogo).
[5] INFOESCOLA (2019). "Carbonato de Cálcio". Acedido a 3 de abril de 2019, em: https://www.infoescola.com/compostos-quimicos/carbonato-de-calcio/
[6] MALI, Suzana [et al.]. Filmes de amido: produção, propriedades e potencial de utilização. Semina Ciências Agrárias, Londrina, vol. 31, n. 1, p. 137-156, 2010.
[7] MENDES, Fernanda Miranda; Universidade de São Paulo, Instituto de Química de São Carlos. Produção e caracterização de Bioplásticos a partir de Amido de Batata, 2009. 198p, il. Dissertação (Mestrado).
[8] NGUYEN DM, Vi Do TV, Grillet AC, Ha Thuc H & Ha Thuc CN (2016), Biodegradability of polymer film based on low-density polyethylene and cassava starch. International Biodeterioration & Biodegradation 115, 257-265.
[9] OLIVEIRA, D. A., BENELLI, P., AMANTE, E. R., (2013). "A literature review on adding value to solid residues: egg shells". Journal of Cleaner Production, Vol. 46, pp. 42-47.
[10] PENJUMRAS P, Rahman RA, Talib RA & Abdan K (2015), Mechanical properties and water absorption behaviour of durian rind cellulose reinforced poly(lactic acid) biocomposites. Interna tional Journal on Advance Science Engineering Information Technology 5(5), 343-349.
[11] PITT, Fernando D.; BOING, Denis; BARROS, António André C. Desenvolvimento histérico, científico e tecnológico de polímeros sintéticos e de fontes renováveis. Revista de divulgação Cientifica do Centro Universitário de Brusque, v. 1,n. 10, 2012.
[12] TSAI, W. YANG., J., HSU., H., LIN, C., LIN, K., CHIU, C., (2008). "Development and characterization of mesoporosity in eggshell ground by planetary ball milling". Microporous and Mesoporous Materials, Vol. 111, Ed. 1-3, pp.379-386

## Claims

1. Transparent and flexible biodegradable polymeric material comprising 7 to 15 % (w/v) hydrolysed starch, 2 to 25 % (w/v) calcium salt, 1 to 5 % (w/v) glycerol and an aqueous solvent as remainder, wherein the mechanical strength of the material ranges from 0.014 - 0.034 N/mm² and a degradability time in soil of at least 30 days, mechanical strength and degradability determined by the methods of the description.

2. Transparent and flexible biodegradable polymeric material according to the preceding claim further comprising calcium carbonate, protein fibers and functional groups, wherein the functional groups comprise groups: CH₂, OH, C=O and amide groups.

3. Transparent and flexible biodegradable polymeric material according to any one of the preceding claims
wherein the source of calcium salt is eggshell, in particular poultry eggshells;
wherein the source of starch is an agri-food effluent, in particular potato starch.

4. Transparent and flexible biodegradable polymeric material according to any one of the preceding claims further comprising a plasticizing agent.

5. Transparent and flexible biodegradable polymeric material according to any one of the preceding claims comprising 8 - 10% (w/v) hydrolysed starch, 5 - 20 % (w/v) calcium salt, optionally a plasticizing agent, and the remainder is an aqueous solvent.

6. Transparent and flexible biodegradable polymeric material according to the preceding claim wherein the aqueous solvent comprises organic acid; preferably a weak organic acid, more preferably 1.5 - 3 % (v/v) organic acid; even more preferably acetic acid, lactic acid, citric acid.

7. Transparent and flexible biodegradable polymeric material according to any one of the preceding claims wherein the mass ratio of calcium salt and hydrolysed starch ranges from 1.5 - 6 (w/w).

8. Transparent and flexible biodegradable polymeric material according to any one of the preceding claims wherein the eggshell particle size ranges from 3 µm to 300 µm; more preferably from 4.5 µm to 200 µm; more preferably from 10 µm to 100 µm, the particle size being determined by the methods of the description.

9. Transparent and flexible biodegradable polymeric material according to any one of the preceding claims wherein the degradability time in soil is at least 32 days, preferably at least 35 days.

10. Article comprising the polymeric material described in any one of the preceding claims; preferably wherein the article is a film, a net, a coating, a wrapper, or a pellet; more preferably wherein the film thickness ranges from 0.05 cm to 1 cm; preferably from 0.1 to 0.5 cm

11. Method of producing the transparent and flexible biodegradable polymeric material described in any of the preceding claims comprising the following steps:
hydrolyzing starch from a food industry effluent with a weak acid, preferably wherein the weak acid has from 5% to 9% acidity;
adding calcium carbonate;
adding glycerol;
mixing the various components at a pH below 5 until a polymerizable mixture is obtained with a viscosity varying between 67-92 mPa.s at 25°C in order to obtain a film;
optionally heating the mixture between 50 - 90 °C in order to obtain a film, preferably 50 - 65°C.

12. Method of production according to any one of the preceding claims wherein the weak acid has 5% to 9% acidity; preferably wherein the weak acid is selected from a list consisting of: acetic acid, lactic acid, citric acid, ascorbic acid, or mixtures thereof.

13. Method of production according to any one of the preceding claims comprising hydrolyzing 8 to 10% (w/v) of the extracted starch in a 1 - 3% (w/v) solution of the weak acid and 80 ml to 100 ml of water.

14. Method of production according to any one of the preceding claims wherein the amount of glycerol ranges from 1-5% (w/v), preferably 2-3% (w/v) glycerol.

15. Use of the transparent and flexible biodegradable polymeric material described in any of the preceding claims as a soil regenerator or as a fertilizer.

## Patentansprüche

1. Transparentes und flexibles, biologisch abbaubares Polymermaterial, umfassend 7 bis 15 % (w/v) hydrolysierte Stärke, 2 bis 25 % (w/v) Calciumsalz, 1 bis 5 % (w/v) Glycerin und ein wässriges Lösungsmittel als Rest, wobei die mechanische Festigkeit des Materials im Bereich von 0,014 bis 0,034 N/mm² liegt und die Abbauzeit im Boden mindestens 30 Tage beträgt, wobei die mechanische Festigkeit und die Abbaubarkeit gemäß den in der Beschreibung angegebenen Verfahren bestimmt werden.

2. Transparentes und flexibles, biologisch abbaubares Polymermaterial nach dem vorangehenden Anspruch, ferner umfassend Calciumcarbonat, Proteinfasern und Funktionsgruppen, wobei die Funktionsgruppen Gruppen umfassen: CH₂, OH, C=O und Amidgruppen.

3. Transparentes und flexibles, biologisch abbaubares Polymermaterial nach einem der vorangehenden Ansprüche
wobei die Quelle des Kalziumsalzes Eierschalen sind, insbesondere Eierschalen von Geflügel;
wobei die Stärkequelle ein Abwasser aus dem Agrar- und Lebensmittelsektor ist, insbesondere Kartoffelstärke.

4. Transparentes und flexibles, biologisch abbaubares Polymermaterial nach einem der vorangehenden Ansprüche, ferner umfassend ein Plastifizierungsmittel.

5. Transparentes und flexibles, biologisch abbaubares Polymermaterial nach einem der vorangehenden Ansprüche, umfassend 8 - 10 % (w/v) hydrolysierte Stärke, 5 - 20 % (w/v) Calciumsalz, gegebenenfalls ein Plastifizierungsmittel, und wobei der Rest ein wässriges Lösungsmittel ist.

6. Transparentes und flexibles, biologisch abbaubares Polymermaterial nach dem vorangehenden Anspruch, wobei das wässrige Lösungsmittel eine organische Säure umfasst, bevorzugt eine schwache organische Säure, besonders bevorzugt 1,5 - 3 % (v/v) organische Säure, ganz besonders bevorzugt Essigsäure, Milchsäure, Zitronensäure.

7. Transparentes und flexibles, biologisch abbaubares Polymermaterial nach einem der vorangehenden Ansprüche, wobei das Massenverhältnis von Calciumsalz und hydrolysierter Stärke im Bereich von 1,5 - 6 (w/w) liegt.

8. Transparentes und flexibles, biologisch abbaubares Polymermaterial nach einem der vorangehenden Ansprüche, wobei die Teilchengröße der Eierschale im Bereich von 3 µm bis 300 µm liegt; besonders bevorzugt von 4,5 µm bis 200 µm; besonders bevorzugt von 10 µm bis 100 µm, wobei die Teilchengröße gemäß den in der Beschreibung angegebenen Verfahren bestimmt wird.

9. Transparentes und flexibles, biologisch abbaubares Polymermaterial nach einem der vorangehenden Ansprüche, wobei die Abbauzeit im Boden mindestens 32 Tage beträgt, bevorzugt mindestens 35 Tage.

10. Gegenstand, umfassend das in einem der vorangehenden Ansprüche beschriebene polymere Material; wobei der Gegenstand bevorzugt eine Folie, ein Netz, eine Beschichtung, eine Verpackung oder ein Pellet ist; wobei die Foliendicke besonders bevorzugt im Bereich von 0,05 cm bis 1 cm liegt, bevorzugt von 0,1 bis 0,5 cm.

11. Verfahren zur Herstellung des in einem der vorangehenden Ansprüche beschriebenen transparenten und flexiblen, biologisch abbaubaren Polymermaterials, umfassend die folgenden Schritte:
Hydrolyse von Stärke aus einem Abwasser der Lebensmittelindustrie mit einer schwachen Säure, wobei die schwache Säure bevorzugt einen Säuregrad von 5 % bis 9 % aufweist;
Zugabe von Kalziumkarbonat;
Zugabe von Glycerin;
Mischen der verschiedenen Komponenten bei einem pH-Wert von unter 5, bis ein polymerisierbares Gemischs mit einer Viskosität zwischen 67-92 mPa.s bei 25°C entsteht, um einen Film zu erhalten;
gegebenenfalls Erhitzen der Mischung auf 50 - 90°C, um einen Film zu erhalten, bevorzugt 50 - 65 °C.

12. Verfahren zur Herstellung nach einem der vorangehenden Ansprüche, wobei die schwache Säure einen Säuregrad von 5 % bis 9 % aufweist; wobei die schwache Säure bevorzugt aus einer Liste ausgewählt ist, bestehend aus: Essigsäure, Milchsäure, Zitronensäure, Ascorbinsäure oder Mischungen davon.

13. Verfahren zur Herstellung nach einem der vorangehenden Ansprüche, umfassend die Hydrolyse von 8 bis 10 % (w/v) der extrahierten Stärke in einer Lösung von 1 bis 3 % (w/v) der schwachen Säure und 80 ml bis 100 ml Wasser.

14. Verfahren zur Herstellung nach einem der vorangehenden Ansprüche, wobei die Menge an Glycerin im Bereich von 1-5 % (w/v), bevorzugt 2-3 % (w/v) Glycerin liegt.

15. Verwendung des in einem der vorangehenden Ansprüche beschriebenen transparenten und flexiblen, biologisch abbaubaren Polymermaterials als Bodenregenerator oder als Düngemittel.

## Revendications

1. Matériau polymère biodégradable transparent et flexible comprenant 7 à 15% (poids/volume) d'amidon hydrolysé, 2 à 25% (poids/volume) de sel de calcium, 1 à 5% (poids/volume) de glycérol et un solvant aqueux pour le reste, dans lequel la résistance mécanique du matériau varie entre 0,014 et 0,034 N/mm² et le délai de dégradabilité dans le sol est d'au moins 30 minutes, la résistance mécanique et la dégradabilité étant déterminées par les procédés de la description.

2. Matériau polymère biodégradable transparent et flexible selon la revendication précédente comprenant également du carbonate de calcium, des fibres de protéine et des groupes fonctionnels, dans lequel les groupes fonctionnels comprennent les groupes : CH₂, OH, C=O et des groupes amide.

3. Matériau polymère biodégradable transparent et flexible selon l'une quelconque des revendications précédentes,
dans lequel la source de sel de calcium est la coquille d'œuf, en particulier des coquilles d'œufs de volaille ;
dans lequel la source d'amidon est un effluent agroalimentaire, en particulier l'amidon de pomme de terre.

4. Matériau polymère biodégradable transparent et flexible selon l'une quelconque des revendications précédentes comprenant également un agent plastifiant.

5. Matériau polymère biodégradable transparent et flexible selon l'une quelconque des revendications précédentes comprenant 8 à 10% (poids/volume) d'amidon hydrolysé, 5 à 20% (poids/volume) de sel de calcium, facultativement un agent plastifiant, et le reste est un solvant aqueux.

6. Matériau polymère biodégradable transparent et flexible selon la revendication précédente dans lequel le solvant aqueux comprend de l'acide organique ; préférablement un acide organique faible, plus préférablement 1,5 à 3% (volume/volume) d'acide organique ; encore plus préférablement de l'acide acétique, de l'acide lactique, de l'acide citrique.

7. Matériau polymère biodégradable transparent et flexible selon l'une quelconque des revendications précédentes dans lequel le rapport de masse entre le sel de calcium et l'amidon hydrolysé varie entre 1,5 et 6 (poids/poids).

8. Matériau polymère biodégradable transparent et flexible selon l'une quelconque des revendications précédentes dans lequel la taille de la particule de coquille d'œuf varie entre 3 µm et 300 µm ; plus préférablement entre 4,5 µm et 200 µm ; plus préférablement entre 10 µm et 100 µm, la taille de la particule étant déterminée par les procédés de la description.

9. Matériau polymère biodégradable transparent et flexible selon l'une quelconque des revendications précédentes dans lequel le délai de dégradabilité dans le sol est d'au moins 32 jours, préférablement au moins 35 jours.

10. Article comprenant le matériau polymère décrit dans l'une quelconque des revendications précédentes ; préférablement dans lequel l'article est une pellicule, un filet, un revêtement, un emballage, ou une pastille ; plus préférablement dans lequel l'épaisseur de la pellicule varie entre 0,05 cm et 1 cm ; préférablement entre 0,1 et 0,5 cm.

11. Procédé de production du matériau polymère biodégradable transparent et flexible décrit dans l'une quelconque des revendications précédentes comprenant les étapes suivantes :
hydrolyser de l'amidon à partir d'un effluent de l'industrie alimentaire avec un acide faible, l'acide faible ayant préférablement 5% à 9% d'acidité ;
ajouter du carbonate de calcium ;
ajouter du glycérol ;
mélanger les divers composants à un pH inférieur à 5 jusqu'à ce qu'un mélange polymérisable soit obtenu avec une viscosité variant entre 67 et 92 mPa.s à 25 °C afin d'obtenir une pellicule ;
facultativement, chauffer le mélange entre 50 et 90 °C afin d'obtenir une pellicule, préférablement entre 50 et 65 °C.

12. Procédé de production selon l'une quelconque des revendications précédentes dans lequel l'acide faible a une acidité de 5% à 9% ; préférablement dans lequel l'acide faible est choisi parmi une liste consistant en : acide acétique, acide lactique, acide citrique, acide ascorbique, ou des mélanges de ceux-ci.

13. Procédé de production selon l'une quelconque des revendications précédentes comprenant hydrolyser 8 à 10% (poids/volume) de l'amidon extrait dans une solution 1 à 3% (poids/volume) de l'acide faible et 80 ml à 100 ml d'eau.

14. Procédé de production selon l'une quelconque des revendications précédentes dans lequel la quantité de glycérol varie entre 1 et 5% (poids/volume), préférablement entre 2 et 3% (poids/volume) de glycérol.

15. Utilisation du matériau polymère biodégradable transparent et flexible décrit dans l'une quelconque des revendications précédentes en tant que régénérateur de sol ou en tant qu'engrais.
